# FASCICULE DE BREVET EUROPEEN

(11) **EP 1 035 484 B1**
(45) Date de publication et mention de la délivrance du brevet: **27.04.2005**
(21) Numéro de dépôt: 00400607.8
(22) Date de dépôt: 07.03.2000
(51) Int. Cl.: G06F 17/30, G06F 17/60, G06F 17/27

(54) **Procédé d'identification de document**
Verfahren zum Identifizieren eines Dokuments
Document identification method

(30) Priorité: 09.03.1999 FR 9902925
(43) Date de publication de la demande: 13.09.2000
(73) Titulaire: Sanyo France Calculatrices Electroniques, S.F.C.E., 92160 Antony (FR); Skopicki, Jacob, 91570 Beievres (FR)
(72) Inventeur: Skopicki, Jacob, 91570 Bievres (FR)
(74) Mandataire: Fosse, Danièle

(56) Documents cités:
- WO-A-97/02536
- WO-A-97/38382
- US-A- 5 287 497
- US-A- 5 293 429
- US-A- 5 371 807

## Description

La présente invention concerne un procédé d'identification et de classement automatique de documents édités dans un ordinateur, ainsi que son dispositif de mise en oeuvre.

De manière générale, lorsqu'on imprime un document depuis un ordinateur tel qu'un courrier, un rapport, un texte par exemple, il est souvent nécessaire de copier ce document pour le classer ensuite dans différents endroits de classement permettant de le retrouver par plusieurs chemins de recherche. Par exemple un classement peut être réalisé par dossier client, par dossier de l'objet traité dans ce document ou encore être un classement chronologique des documents partants. Une telle forme d'archivage occupe de l'espace et du temps.

On connaît déjà des procédés d'archivage disponibles sur des ordinateurs associés à un procédé de recherche des documents archivés. Ainsi, lorsqu'on a préparé un document tel qu'un courrier et qu'on souhaite archiver ce document, on renseigne un système de classement du document dans lequel on définit des paramètres de classement tels que, par exemple, le type de document, la personne, un événement, etc. Une fois ces paramètres choisis, on classe donc dans un ou plusieurs classements, un classement renfermant des documents ayant une caractéristique commune. Lorsqu'on le recherche, on rentre un ou plusieurs de ces critères de recherche qui permettent d'accéder audit document. On a donc ainsi un archivage personnel des documents.

On a proposé également un procédé d'archivage automatique des documents édités dans lequel on reconnaît la nature du document à l'imprimante. Cette reconnaissance s'effectue par exemple pour le premier document édité dans un flot de documents, ce premier document étant reconnu comme devant être classé dans un classement d'après les critères particuliers qu'il renferme, la suite des documents édités sera également mémorisée dans le même classement.

Un tel procédé, selon US-A-5 293 429, demande une phase d'apprentissage importante dans la mesure où il convient de définir au préalable les critères d'identification d'un type de document pour sa reconnaissance et son archivage dans une base donnée. Un tel procédé d'apprentissage est lourd à mettre en oeuvre et n'est pas à la portée d'un utilisateur lambda.

On connaît également par WO-A-9702536, un procédé d'archivage de documents dans lequel un circuit de saisie et de lecture commande la mémoire d'un micro-ordinateur au moyen des derniers signaux de sortie d'une imprimante mise en marche, lesquels produisent la présentation de l'impression et archivent dans le micro-ordinateur une reproduction binaire à l'identique du document à imprimer, par exemple sur un support de données non effaçables tel qu'un CDrom. Cependant, un tel procédé s'il copie tous les documents édités par une imprimante il ne permet pas un archivage classé des documents permettant leur recherche en fonction de critères d'identification spécifiques.

Un inconvénient majeur de ces procédés d'archivage consiste en ce qu'il est difficile de pouvoir identifier automatiquement facilement un document de manière à le classer et à l'archiver par exemple. Ainsi, si un critère d'identification est, par exemple la présence d'un terme dans un document, on va identifier tous les documents comportant ce terme, ce qui ne présente pas un intérêt pour le classement.

Procédé d'identification et de classement automatique de document dans un ordinateur comprenant :
une analyse des données contenues dans le document, constituée de la recherche du contenu, ou teneur, de chaque donnée et de la recherche des paramètres de positionnement de ladite donnée dans le document,
   - une comparaison de chaque donnée à des critères d'identification caractérisant un document, à la fois par le contenu ou teneur, d'une donnée appartenant au libellé du document, et par des paramètres de positionnement de ladite donnée dans le document, et
   - un classement à partir du résultat de ladite comparaison.

Ainsi, un tel procédé permet avantageusement d'identifier un document sans ambiguïté. En effet, la comparaison positive entre une donnée d'un document et un critère d'identification du type de document permet d'identifier le document analysé comme étant du même type que celui défini par le critère d'identification puisqu'il présente une donnée dont la teneur et/ou le positionnement est identique au critère d'identification du type de document.

Ainsi, un critère d'identification d'une facture peut être le terme « facture » à 3 cm de la marge gauche et à 6 cm du bord supérieur de la facture. Si le document analysé présente une donnée dont la teneur est « facture » et le positionnement est à 3 cm du bord gauche et à 6 cm du bord supérieur du document, la comparaison entre cette donnée et le critère d'identification d'une facture est positive, le document est identifié comme étant une facture. Un autre critère d'identification peut être la recherche des références, le document étant alors identifié comme une facture présentant de telles références.

De préférence, lorsque la comparaison est négative, on propose de définir au moins un nouveau critère d'identification et on ouvre une fenêtre de paramètrage pour définir au moins un nouveau critère d'identification associé à ce document, ledit nouveau critère étant mémorisé pour identifier par la suite tout document présentant cette donnée. On définit un critère d'identification en copiant une donnée du libellé du document servant de critère d'identification vers la fenêtre de paramètrage où cette donnée est copiée associée à ses paramètres de positionnement dans le document.

Ainsi, le procédé d'identification selon l'invention permet de créer au fur et à mesure des critères d'identification pour de nouveaux documents et n'importe quelle donnée d'un document peut servir à définir un critère d'identification.

La présente invention a également pour but de proposer un procédé de classement et d'archivage automatique de documents individuels édités depuis un ordinateur dans lequel on puisse identifier grâce au procédé d'identification ci-dessus évoqué chaque document envoyé vers une imprimante pour l'archiver et définir de nouveaux critères d'identification lorsque le document ne répond à aucun critère d'identification déjà connu.

A cet effet, la présente invention a pour objet un procédé d'identification et de classement automatique de documents édités depuis un ordinateur, caractérisé en ce que, lors de l'envoi d'un document à éditer vers un support d'édition, on analyse les données contenues dans le document selon leur teneur et leur positionnement dans le document et on les compare une à une à un ou des critères d'identification de document, un critère d'identification caractérisant un document par la teneur et le positionnement d'une donnée caractéristique du document, on compare également les données du document à au moins un critère de classement, chaque critère correspondant à un type de document à classer et à un classement dans la mémoire de l'ordinateur dans laquelle sont mémorisés des documents présentant ce critère ; et lorsque la comparaison est négative, on peut définir au moins un nouveau critère d'identification correspondant à un type de document et au moins un critère de classement correspondant à un classement dans la mémoire de l'ordinateur où est copié ledit document ; et, lorsque la comparaison est positive, on copie automatiquement ledit document dans la mémoire de l'ordinateur selon le ou les classements correspondants.

Ainsi, de manière avantageuse, le procédé selon l'invention permet d'archiver automatiquement un document édité depuis un ordinateur vers un support d'édition dans la mesure où, à chaque fois qu'on édite un document, celui-ci est identifié automatiquement car il présente un ou plusieurs critères d'identification représentatifs d'un document, les critères de classement permettant de déterminer le nombre de classements auxquels ce document appartient et qui renferment des documents d'un même type.

Dans le terme support d'édition, on entend les imprimantes mais également les télécopieurs intégrés à un ordinateur, les émissions par réseaux intranet ou internet, des supports de copie, etc. Ainsi, c'est en quelque sorte le support d'édition qui reconnaît les documents qui lui sont envoyés depuis l'ordinateur, les copie, les trie, les classe automatiquement.

De cette manière, un document peut être archivé selon plusieurs classements ce qui offre des chemins de recherche multiples, le procédé selon l'invention offrant donc la possibilité de trier et de classer les documents édités.

De manière avantageuse, on ne copie qu'une fois le document dans la mémoire mais comme les critères d'identification sont associés à des critères de classement, il existe autant de chemins de recherche possibles que de critères de classement. Ainsi, le procédé selon l'invention offre un archivage et un classement pour un minimum d'espace occupé.

Mais de plus, lorsqu'un document est identifié comme étant inconnu, c'est-à-dire ne répondant à aucun des critères d'identification, le procédé, de manière automatique, autorise la définition d'au moins un nouveau critère d'identification relatif à ce nouveau document. En plus, du nouveau critère d'identification, il est également possible de définir au moins un critère de classement. Une fois, ces critères définis, le document est archivé dans un classement destiné à renfermer par la suite des documents au même critère de classement et au même critère d'identification tandis que le critère ou les critères d'identification ainsi que le ou les critères de classement sont mémorisés et serviront à l'identification des documents édités par la suite et à leur archivage.

Ainsi, le procédé selon l'invention offre la possibilité de définir au fur et à mesure de l'émission de documents différents de nouveaux critères d'identification et critères de classement caractéristiques de ces documents.

Il se révèle donc d'une flexibilité importante dans la mesure où il n'est pas besoin de définir au préalable un document.

Selon une première forme de réalisation, le critère d'identification et le critère de classement sont définis au moment même de l'émission du document vers un support d'édition tel qu'une imprimante par exemple. Ce procédé permet donc de traiter individuellement chaque document arrivant vers le support d'édition.

Ainsi, le document sur le chemin vers le support d'édition est analysé. Lorsque la comparaison est négative, l'utilisateur peut alors définir un ou des critères d'identification pour reconnaître par la suite ce type de document ainsi que des critères de classement pour l'archiver dans les différents types de classement et on édite ensuite le document. L'utilisateur peut également choisir de ne pas définir de critères d'identification et le document est simplement édité.

Lorsque la comparaison est positive, le document reconnu est archivé et édité.

Selon une seconde forme de réalisation du procédé de l'invention, l'ensemble des documents édités non identifiés depuis un ou plusieurs ordinateurs sont stockés temporairement dans un répertoire où un utilisateur, de préférence autorisé, vient déclencher l'analyse de ces documents.

Ainsi, les documents analysés sont soit identifiés et archivés soit non identifiés et, dans ce cas, il est possible de définir de nouveaux critères d'identification et de classement ou de détruire les documents qu'on ne souhaite pas identifier et archiver par la suite.

Cette forme de réalisation est avantageuse, car elle permet un stockage de documents édités depuis un ou plusieurs ordinateurs dans un seul répertoire ce qui permet une plus grande sécurité en enlevant à chaque utilisateur émettant un document la possibilité de détruire ce document s'il n'est pas identifié et archivé.

De préférence, chaque critère d'identification est spécifique à une donnée caractéristique d'un document et un critère d'identification est constitué à la fois de la teneur d'une donnée appartenant au libellé du document et des paramètres de positionnement de cette donnée dans le document.

L'analyse des données renfermées dans le document à éditer s'effectue de préférence sur deux niveaux d'une part la recherche de la teneur d'une donnée dans le libellé du document et d'autre part la recherche des paramètres de positionnement de cette donnée dans le document.

Lors d'une comparaison négative entre des critères d'identification déjà connus et un document à éditer, ce document est reconnu comme non identifié et donc non archivable. On ouvre alors une fenêtre de paramètrage pour définir au moins un nouveau critère d'identification associé à ce document et au moins un critère de classement, ledit nouveau critère étant mémorisé pour identifier par la suite tout document répondant au même critère d'identification et le critère de classement commandant son archivage automatique dans le classement associé. Cette définition est effectuée par la copie d'une donnée du libellé du document servant de critère d'identification vers la fenêtre de paramètrage où la donnée est copiée associée de préférence à ses paramètres de positionnement dans le document. On copie alors dans la mémoire de l'ordinateur le document dans un classement associé au nouveau critère d'identification.

Ainsi, la définition des critères d'identification s'effectue de manière très simple par une simple manipulation (copier-glisser-coller) ce qui permet une utilisation par tous les utilisateurs d'ordinateurs, même débutant.

Le critère d'identification peut être un type de critère dans lequel plusieurs termes sont admis. Par exemple, à un emplacement donné du document, on peut avoir le terme facture mais on doit pouvoir également identifier le terme avoir, note de débit, etc, au même endroit comme révélateur d'un document du même type appartenant au même classement. Par terme, on entend par exemple un mot, une série de lettres ou de chiffres ou un nombre donné de chiffres ou de lettres quelle que soit leur signification.

Les critères d'identification nouvellement définis sont mémorisés et serviront à l'identification d'un document présentant les mêmes caractéristiques lors d'une édition ultérieure.

On définit également des critères de classement qui servent à l'archivage automatique dudit document dans un classement donné, ces critères correspondant à la présence d'un terme ou d'une suite de termes dans un document, par exemple.

Le procédé selon l'invention peut être associé à un ou plusieurs supports d'édition, de préférence au choix de l'utilisateur qui sélectionne alors non seulement un support d'édition mais qui choisit également d'associer à ce support d'édition le procédé de classement et d'archivage automatique selon l'invention.

La présente invention a également pour objet un dispositif de mise en oeuvre du procédé selon l'invention caractérisé en ce qu'il comporte des moyens d'analyse des données renfermées dans un document à éditer envoyé depuis un ordinateur vers un support d'édition, des moyens de comparaison desdites données une à une avec un ou plusieurs critères d'identification en mémoire, des moyens de copie dans la mémoire de l'ordinateur du document lors d'une comparaison positive et des moyens de définition d'au moins un critère d'identification et d'au moins un critère de classement d'un document lors d'une comparaison négative.

De manière avantageuse, les moyens d'analyse des données peuvent être constitués par des moyens d'analyse et de transcodage des signaux émis depuis l'ordinateur vers le support d'édition.

Lorsque la comparaison est négative, des moyens de définition de nouveaux critères d'identification sont déclenchés, ces moyens de définition comportant des moyens de copie (copier-glisser-coller) permettant le transfert vers une mémoire d'une partie du document à la fois dans son libellé et dans les paramètres définissant son emplacement dans le document, lesdits moyens de définition comportant également des moyens d'inscription de données permettant à l'utilisateur de nommer un type de document associé à ces critères d'identification par exemple. Les nouveaux critères d'identification définis sont gardés en mémoire et permettent une identification, un classement et un archivage automatique d'un document lors d'une édition ultérieure.

De préférence, le dispositif de mise en oeuvre du procédé selon l'invention est associé au pilote d'impression d'une imprimante. On peut donc choisir l'emplacement du dispositif par rapport au support d'édition. Ainsi, parmi plusieurs imprimantes reliées à l'ordinateur, on choisit une ou plusieurs de ces imprimantes pour travailler avec le dispositif selon l'invention et seules les impressions envoyées sur cette imprimante seront identifiées, classées et archivées. Tout autre support d'édition (fax, internet, etc.) peut être associé aux imprimantes et donc au dispositif selon l'invention.

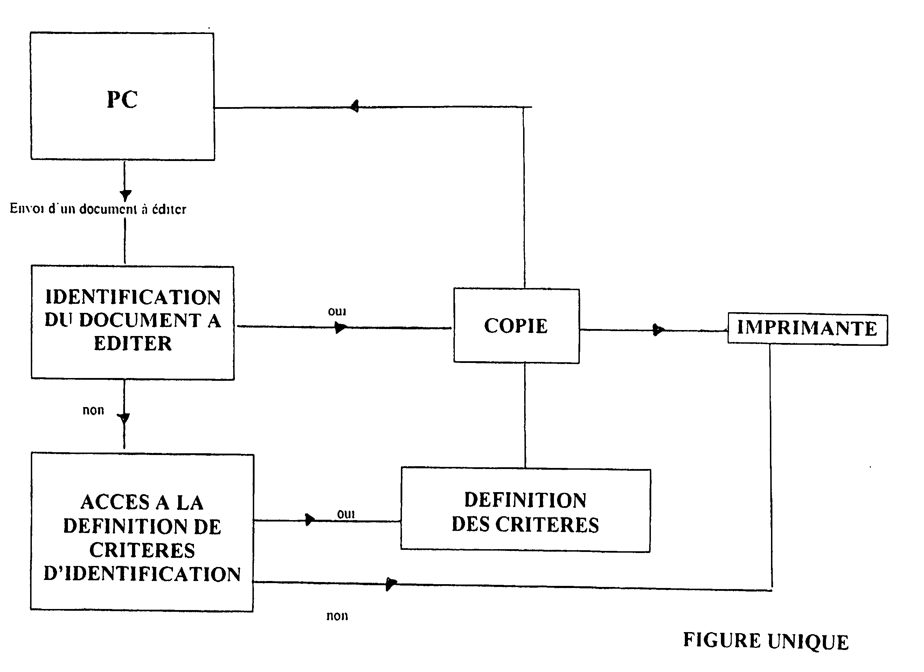

On décrira maintenant l'invention plus en détail en référence au dessin dans lequel la figure unique représente de manière schématique les différentes étapes du procédé de classement et d'archivage automatique selon l'invention.

Lors de l'envoi d'un document à éditer depuis un ordinateur (PC) vers un support d'édition tel qu'une imprimante 1, on procède à l'identification du document à éditer en analysant les données contenues dans ledit document et en les comparant une à une à un ou plusieurs critères d'identification.

Ces critères d'identification permettent de caractériser un document à la fois par son contenu et par le positionnement des données dans ledit document. Ainsi, une facture peut être caractérisée par des critères d'identification tels que le terme « facture » à 15 cm du bord gauche et à 6 cm du bord supérieur du bord du document, le terme « date » à 15 cm du bord gauche et à 8 cm du bord supérieur du document.

Pour un courrier, l'un des critères d'identification peut correspondre à la plage de positionnement dans le courrier correspondant à l'adresse et dans lequel on reconnaît une série de cinq chiffres (code postal) par exemple.

Lorsque ces deux critères d'identification sont reconnus dans le document à éditer, on repère également les critères de classement tel que le nom du client et on copie ce document dans la mémoire de l'ordinateur selon un classement renfermant des documents du même type tel que « facture » et dans un classement lié à un client par exemple à l'intérieur du classement « facture ». La combinaison de critères d'identification et de critères de classement affine le classement.

En fonction des critères de classement définissant un classement, le document peut être accessible par plusieurs chemins de recherche.

Lorsque le document à éditer ne répond à aucun des critères d'identification, on offre la possibilité de définir de nouveaux critères d'identification et des critères de classement pour définir dans la mémoire un classement correspondant de manière à permettre sa copie et son archivage automatique selon ces nouveaux critères et l'archivage automatique de documents ultérieurs présentant le même critère qui seront édités par la suite.

## Revendications

1. Procédé d'identification et de classement automatique de document dans un ordinateur comprenant :
- une analyse des données contenues dans le document, constituée de la recherche du contenu, ou teneur, de chaque donnée et de la recherche des paramètres de positionnement de ladite donnée dans le document,
- une comparaison de chaque donnée à des critères d'identification caractérisant un document, d'une part par le contenu, ou teneur, d'une donnée appartenant au libellé du document et d'autre part par des paramètres de positionnement de ladite donnée dans le document, et
- un classement à partir du résultat de ladite comparaison.

2. Procédé selon la revendication 1,
**caractérisé en ce que**, lorsque la comparaison est négative, on ouvre une fenêtre de paramètrage pour définir au moins un nouveau critère d'identification associé à ce document, ledit nouveau critère étant mémorisé pour identifier par la suite tout document présentant cette donnée.

3. Procédé selon la revendication 2,
**caractérisé en ce qu'**on définit un critère d'identification en copiant une donnée du libellé du document servant de critère d'identification vers la fenêtre de paramètrage où cette donnée est copiée associée à ses paramètres de positionnement dans le document.

4. Procédé selon la revendication 1, **caractérisé en ce que**, lors de l'envoi d'un document à éditer vers un support d'édition, on analyse les données contenues dans le document selon leur teneur et leur positionnement dans le document et on les compare une à une à un ou des critères d'identification de document, un critère d'identification caractérisant un document par la teneur et le positionnement d'une donnée caractéristique du document, on compare également les données du document à au moins un critère de classement, chaque critère correspondant à un type de document à classer et à un classement dans la mémoire de l'ordinateur dans laquelle sont mémorisés des documents présentant ce critère ; et lorsque la comparaison est négative, on peut définir au moins un nouveau critère d'identification correspondant à un type de document et au moins un critère de classement correspondant à un classement dans la mémoire de l'ordinateur où est copié ledit document ; et, lorsque la comparaison est positive, on copie automatiquement ledit document dans la mémoire de l'ordinateur selon le ou les classements correspondants.

5. Procédé selon la revendication 4,
**caractérisé en ce que**, lorsque la comparaison est négative, on ouvre une fenêtre de paramètrage pour définir au moins un nouveau critère d'identification associé à ce document et au moins un critère de classement, ledit nouveau critère d'identification étant mémorisé pour identifier par la suite tout document répondant au même critère d'identification et le critère de classement commandant son archivage automatique dans le classement associé.

6. Procédé selon la revendication 5,
**caractérisé en ce qu'**on définit un critère d'identification en copiant une donnée du libellé du document servant de critère d'identification vers la fenêtre de paramètrage où cette donnée est copiée associée à ses paramètres de positionnement dans le document.

7. Procédé selon l'une des revendications 4 à 6,
**caractérisé en ce qu'**on analyse les données renfermées dans le document en analysant et en transcodant les signaux émis depuis l'ordinateur vers le support d'édition.

8. Dispositif de mise en oeuvre du procédé selon l'une des revendications 4 à 7,
**caractérisé en ce qu'**il comporte des moyens d'analyse des données renfermées dans un document à éditer envoyé depuis un ordinateur vers un support d'édition, des moyens de comparaison desdites données une à une avec un ou plusieurs critères d'identification en mémoire, des moyens de copie dans la mémoire de l'ordinateur du document lors d'une comparaison positive et des moyens de définition d'au moins un critère d'identification et d'au moins un critère de classement d'un document lors d'une comparaison négative.

9. Dispositif selon la revendication 8,
**caractérisé en ce que** les moyens de définition de critère d'identification du document comportent des moyens de copie dans le document de la donnée servant de critère d'identification, ladite donnée étant copiée avec ses paramètres d'emplacement dans le document depuis le document.

10. Dispositif selon l'une des revendications 4 à 9,
**caractérisé en ce que** le critère d'identification et le critère de classement sont définis au moment même de l'émission du document vers un support d'édition.

11. Dispositif selon l'une des revendications 4 à 9,
**caractérisé en ce que** l'ensemble des documents édités non identifiés depuis un ou plusieurs ordinateurs sont stockés temporairement dans un répertoire où un utilisateur, de préférence autorisé, vient déclencher l'analyse de ces documents.

## Patentansprüche

1. Verfahren zum automatischen Identifizieren und Klassifizieren eines Dokuments in einem Rechner mit:
- einer Analyse der in dem Dokument enthaltenen Daten, welche in der Suche nach dem Inhalt oder Gehalt jedes Datums und in der Suche nach den
Positionierungsparametern des genannten Datums in dem Dokument besteht,
- einem Vergleich jedes Datums mit
Identifizierungskriterien, welche ein Dokument einerseits durch den Inhalt oder Gehalt eines zu der Bezeichnung des Dokuments gehörenden Datums und
andererseits durch Positionierungsparameter des genannten Datums in dem Dokument kennzeichnen und
- einer Klassifizierung aufgrund des Ergebnisses des genannten Vergleichs.

2. Verfahren nach Anspruch 1, **dadurch gekennzeichnet, dass** bei negativem Vergleich ein Parametrierungsfenster geöffnet wird, um mindestens ein neues, diesem Dokument zugehörigen Identifizierungskriterium zu definieren, wobei das genannte neue Kriterium gespeichert wird, um später jedes dieses Datum aufweisende Dokument zu identifizieren.

3. Verfahren nach Anspruch 2, **dadurch gekennzeichnet, dass** ein Identifizierungskriterium definiert wird, indem ein als Identifizierungskriterium dienendes Datum der Bezeichnung des Dokuments zu dem Parametrierungsfenster kopiert wird, in dem dieses Datum in Verbindung mit seinen Positionierungsparametern in dem Dokument kopiert wird.

4. Verfahren nach Anspruch 1, **dadurch gekennzeichnet, dass** bei der Sendung eines zu editierenden Dokuments zu einem Editionsträger die in dem Dokument enthaltenen Daten nach ihrem Gehalt und ihrer Positionierung in dem Dokument analysiert werden und sie das eine nach dem anderen mit einem Kriterium oder mit Kriterien zur Identifizierung des Dokuments verglichen werden, wobei ein Identifizierungskriterium ein Dokument durch den Gehalt und die Positionierung eines charakteristischen Datums des Dokuments kennzeichnet, die Dokumentdaten ebenfalls mit mindestens einem Klassifizierungskriterium verglichen werden, wobei jedes Kriterium einem zu klassifizierenden Dokumenttyp und einer Klassifizierung in dem Speicher des Rechners entspricht, in welchem dieses Kriterium aufweisende Dokumente gespeichert sind, und bei negativem Vergleich mindestens ein neues, einem Dokumenttyp entsprechendes Identifizierungskriterium und mindestens ein Klassifizierungskriterium definiert werden können, welches einer Klassifizierung in dem Speicher des Rechners entspricht, in dem das genannte Dokument kopiert ist, und bei positivem Vergleich das genannte Dokument automatisch in dem Speicher des Rechners entsprechend der oder den entsprechenden Klassifizierung(en) kopiert wird.

5. Verfahren nach Anspruch 4, **dadurch gekennzeichnet, dass** bei negativem Vergleich ein Parametrierungsfenster geöffnet wird, um mindestens ein neues, diesem Dokument zugehöriges Identifizierungskriterium und mindestens ein Klassifizierungskriterium zu definieren, wobei das genannte neue Identifizierungskriterium gespeichert wird, um später jedes Dokument, das demselben Identifizierungskriterium entspricht, zu identifizieren, und das Klassifizierungskriterium dessen automatische Archivierung in der zugehörigen Klassifizierung steuert.

6. Verfahren nach Anspruch 5, **dadurch gekennzeichnet, dass** ein Identifizierungskriterium definiert wird, indem ein als Identifizierungskriterium dienendes Datum der Bezeichnung des Dokuments zu dem Parametrierungsfenster kopiert wird, in dem dieses Datum in Verbindung mit seinen Positionierungsparametern in dem Dokument kopiert wird.

7. Verfahren nach einem der Ansprüche 4 bis 6, **dadurch gekennzeichnet, dass** die in dem Dokument enthaltenen Daten dadurch analysiert werden, dass die von dem Rechner zu dem Editionsträger gesendeten Signale analysiert und transkodiert werden.

8. Vorrichtung zur Durchführung des Verfahrens nach einem der Ansprüche 4 bis 7, **dadurch gekennzeichnet, dass** sie Mittel zum Analysieren der Daten, welche in einem zu editierenden und von einem Rechner zu einem Editionsträger gesendeten Dokument enthalten sind, Mittel zum Vergleichen der genannten Daten das eine nach dem anderen mit einem oder mit mehreren gespeicherten Identifizierungskriterien, Mittel zum Kopieren des Dokuments in dem Speicher des Rechners bei einem positiven Vergleich und Mittel zur Definition mindestens eines Kriteriums zur Identifizierung und mindestens eines Kriteriums zur Klassifizierung eines Dokuments bei einem negativen Vergleich aufweist.

9. Vorrichtung nach Anspruch 8, **dadurch gekennzeichnet, dass** die Mittel zur Definition eines Kriteriums zur Identifizierung des Dokuments Mittel enthalten, um in dem Dokument das als Identifizierungskriterium dienende Datum zu kopieren, wobei das genannte Datum mit seinen Positionierungsparametern in dem Dokument von dem Dokument aus kopiert wird.

10. Vorrichtung nach einem der Ansprüche 4 bis 9, **dadurch gekennzeichnet, dass** das Identifizierungskriterium und das Klassifizierungskriterium dann definiert werden, wenn das Dokument zu einem Editionsträger gesendet wird.

11. Vorrichtung nach einem der Ansprüche 4 bis 9, **dadurch gekennzeichnet, dass** die Gesamtheit der von einem oder von mehreren Rechnern aus editierten und nicht identifizierten Dokumente vorübergehend in einem Verzeichnis hinterlegt werden, in dem ein - vorzugsweise autorisierter - Benutzer die Analyse dieser Dokumente auslöst.

## Claims

1. Method for identifying and automatically filing a document in a computer, comprising:
- analysis of the data contained in the document, in which the content of each datum is searched and the positioning parameters of the said datum in the document are searched,
- comparison of each datum with identification criteria characterising a document, on the one hand by the content of a datum belonging to the text of the document and on the other hand by positioning parameters of the said datum in the document, and
- filing based on the result of the said comparison.

2. Method according to Claim 1, **characterised in that** when the comparison is negative, a parameterisation window is opened in order to define at least one new identification criterion associated with this document, the said new criterion being saved in order to subsequently identify any document having this datum.

3. Method according to Claim 2, **characterised in that** an identification criterion is defined by copying a datum of the text of the document used as an identification criterion to the parameterisation window, where this datum is copied in association with its positioning parameters in the document.

4. Method according to Claim 1, **characterised in that** when a document to be printed is sent to a printing medium, the data contained in the document are analysed according to their content and their positioning in the document and they are compared one-by-one with one or more document identification criteria, an identification criterion characterising a document by the content and positioning of a characteristic datum of the document, the data of the document are also compared with at least one filing criterion, each criterion corresponding to a type of document to be filed and to a filing class in the memory of the computer where the documents having this criterion are saved; and when the comparison is negative, it is possible to define at least one new identification criterion corresponding to a document type and at least one filing criterion corresponding to a filing class in the memory of the computer, where the said document is copied; and when the comparison is positive, the said document is automatically copied into the memory of the computer according to the corresponding filing class or classes.

5. Method according to Claim 4, **characterised in that** when the comparison is negative, a parameterisation window is opened in order to define at least one new identification criterion associated with this document and at least one filing criterion, the said identification criterion being saved in order to subsequently identify any document meeting the same identification criterion and the filing criterion causing it to be archived automatically in the associated filing class.

6. Method according to Claim 5, **characterised in that** an identification criterion is defined by copying a datum of the text of the document used as an identification criterion to the parameterisation window, where this datum is copied in association with its positioning parameters in the document.

7. Method according to one of Claims 4 to 6, **characterised in that** the data contained in the document are analysed by analysing and transcoding the signals sent from the computer to the printing medium.

8. Device for carrying out the method according to one of Claims 4 to 7, **characterised in that** it includes means for analysing the data contained in a document to be printed, which is sent from a computer to a printing medium, means for comparing the said data with one or more identification criteria held in memory, means for copying the document into the memory of the computer in the event of a positive comparison, and means for defining at least one identification criterion and at least one filing criterion of a document in the event of a negative comparison.

9. Device according to Claim 8, **characterised in that** the means for defining an identification criterion of the document include means for copying the datum used as an identification criterion in the document, the said datum being copied from the document together with its positioning parameters in the document.

10. Device according to one of Claims 4 to 9, **characterised in that** the identification criterion and the filing criterion are defined at the same time as the document is sent to a printing medium.

11. Device according to one of Claims 4 to 9, **characterised in that** all the unidentified printed documents from one or more computers are temporarily stored in a directory where a user, preferably an authorised user, will initiate the analysis of these documents.
